(19) Europäisches Patentamt
European Patent Office
Office européen des brevets

(11) **EP 0 927 119 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(51) Int Cl.[7]: **B60T 8/00**

(86) Internationale Anmeldenummer:
**PCT/DE98/00390**

(21) Anmeldenummer: **98910616.6**

(22) Anmeldetag: **12.02.1998**

(87) Internationale Veröffentlichungsnummer:
**WO 98/043858 (08.10.1998 Gazette 1998/40)**

(54) **VERFAHREN UND VORRICHTUNG ZUR ERMITTLUNG EINER DIE FAHRZEUGGESCHWINDIGKEIT BESCHREIBENDEN GRÖSSE**

METHOD AND DEVICE FOR DETERMINING A VARIABLE DESCRIBING THE SPEED OF A VEHICLE

PROCEDE ET DISPOSITIF POUR DETERMINER UNE GRANDEUR REPRESENTANT LA VITESSE D'UN VEHICULE

(84) Benannte Vertragsstaaten:
**DE FR GB**

(30) Priorität: **29.03.1997 DE 19713252**

(43) Veröffentlichungstag der Anmeldung:
**07.07.1999 Patentblatt 1999/27**

(73) Patentinhaber: **ROBERT BOSCH GMBH 70442 Stuttgart (DE)**

(72) Erfinder: **MUELLER, Elmar D-71706 Markgröningen (DE)**

(56) Entgegenhaltungen:
**EP-A- 0 322 911      DE-A- 3 735 035**
**DE-A- 3 915 879**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Stand der Technik

Die Erfindung betrifft ein Verfahren bzw. eine Vorrichtung zur Ermittlung einer die Fahrzeuggeschwindigkeit beschreibenden Größe.

Verfahren und Vorrichtungen zur Ermittlung einer die Fahrzeuggeschwindigkeit beschreibenden Größe sind aus dem Stand der Technik in vielerlei Modifikationen bekannt.

In der gattungsbildenden DE-OS 38 33 212 (US 5,272,634) ist für ein mit einem Antiblockierregelsystem ausgestattetes, einachsig angetriebenes Fahrzeug, die Bildung einer Referenzgröße für die Fahrzeuggeschwindigkeit außerhalb der Bremsdruckregelung beschrieben. Im wesentlichen wird hierzu ausgehend von den Geschwindigkeiten der beiden angetriebenen Räder eine gemittelte Radgeschwindigkeit ermittelt. Ist die zeitliche Ableitung dieser gemittelten Radgeschwindigkeit größer Null, so wird die Referenzgröße durch die Geschwindigkeit des langsameren der beiden angetriebenen Räder bestimmt. Ist die zeitliche Ableitung dieser gemittelten Radgeschwindigkeit kleiner Null, so wird die Referenzgröße durch die Geschwindigkeit des schnelleren der beiden angetriebenen Räder bestimmt. Dabei ist die Steigung der Referenzgröße für die Fahrzeuggeschwindigkeit auf einen maximalen Wert beschränkt.

Die DE-OS 40 09 195 (US 5,364,174) beschreibt für ein in einem allradgetriebenen Fahrzeug eingesetztes Antiblockierregelsystem die Bildung einer für die Schlupfregelung benötigten Referenzgeschwindigkeit. Im wesentlichen wird hierbei die Referenzgeschwindigkeit bei Geschwindigkeitszunahme durch die Geschwindigkeit des langsamsten und bei Geschwindigkeitsabnahme durch die Geschwindigkeit des drittschnellsten Rades bestimmt. Im Übergangsbereich zwischen Zunahme und Abnahme, wird der erreichte Wert der langsamsten Radgeschwindigkeit konstant gehalten. Für den Fall, daß die Geschwindigkeit des drittschnellsten Rades zu stark von einer Hilfsreferenzgeschwindigkeit abweicht, wird die Referenzgeschwindigkeit parallel zu dieser Hilfsreferenzgeschwindigkeit geführt. Gebildet wird die Hilfsreferenzgeschwindigkeit dadurch, daß sie durch die Geschwindigkeit des drittschnellsten Rades angehoben und durch die Geschwindigkeit des schnellsten Rades verringert wird. Auch sie wird in einem Übergangsbereich konstant gehalten. Liegt ein Instabilitätsfall aufgrund einer Blockierneigung vor, so wird die Steigung der Referenzgeschwindigkeit durch die Steigung der Hilfsreferenzgeschwindigkeit bestimmt. Drehen die Räder durch, so wird die Referenzgeschwindigkeit konstant gehalten und der Anstieg der Hilfsreferenzgeschwindigkeit auf eine physikalisch mögliche Fahrzeugbeschleunigung begrenzt. Werden die Hinterräder des allradgetriebenen Fahrzeuges beim Bremsen vom Antrieb entkoppelt, so wird eine leicht modifizierte Bildung der Referenzgeschwindigkeit verwendet. Außerhalb der Regelung wird die Referenzgeschwindigkeit angehoben, wenn die Geschwindigkeiten aller Räder über ihr liegen. Sind zwei oder drei Räder schneller als die Referenzgeschwindigkeit, so wird sie konstant gehalten. Ist keines oder nur eines der Räder schneller als die Referenzgeschwindigkeit, so wird die Referenzgeschwindigkeit nach unten angeglichen.

Aus der DE 39 15 879 A1 sind ein Verfahren und eine Schaltungsanordnung zur Auswertung der Radgeschwindigkeitssignale für eine Blockierschutz- oder Antriebsschlupfregelung bekannt. Dazu wird aus den Geschwindigkeitssignalen der einzelnen Räder eine Basisgeschwindigkeit abgeleitet und für jedes Rad ein Radfaktor gebildet, der multipliziert mit der Radgeschwindigkeit die Basisgeschwindigkeit ergibt. Die Radgeschwindigkeit multipliziert mit dem zugehörigen Radfaktor wird bei weiterer Signalverarbeitung anstelle der tatsächlichen Radgeschwindigkeit zur Bildung der Referenzgeschwindigkeit, der Steuersignale usw. verwendet.

Systeme zur Regelung des Bremsschlupfes bzw. des Antriebsschlupfes sind in allgemeiner Form beispielsweise aus dem von der Robert Bosch GmbH Stuttgart herausgegebenen Buch "Bremsanlagen für Kraftfahrzeuge", VDI-Verlag, Düsseldorf, 1. Auflage, 1994, bekannt.

Die Aufgabe der vorliegenden Erfindung besteht darin, die Ermittlung einer die Geschwindigkeit eines Fahrzeuges beschreibenden Größe zu verbessern.

Diese Aufgabe wird durch die Merkmale des Anspruchs 1 bzw. durch die des Anspruchs 10 gelöst.

Vorteile der Erfindung

Der Vorteil des erfindungsgemäßen Verfahrens bzw. der erfindungsgemäßen Vorrichtung gegenüber dem eingangs genannten Stand der Technik ist der, daß mit ihm bzw. mit ihr die die Geschwindigkeit des Fahrzeuges beschreibende Größe für ein beliebig angetriebenes Fahrzeug, d.h. für ein front-, bzw. heck- bzw. allradgetriebenes Fahrzeug für einen beliebigen Betriebszustand des Fahrzeuges ermittelt werden kann. Dabei ist die Ermittlung der die Fahrzeuggeschwindigkeit beschreibenden Größe unabhängig davon, ob während ihrer Ermittlung ein im Fahrzeug implementiertes Regelungssystem im Sinne einer Bremsschlupfregelung bzw. einer Antriebsschlupfregelung bzw. im Sinne einer beispielsweise der Brems- bzw. Antriebsschlupfregelung übergeordneten Regelung aktiv ist. Als Beispiel für solch eine übergeordnete Regelung sei hier exemplarisch die Fahrdynamikregelung erwähnt, wie sie beispielsweise aus dem in der Automobiltechnischen Zeitschrift (ATZ) 96, 1994, Heft 11, auf den Seiten 674 bis 689 erschienenen Veröffentlichung "FDR - die Fahrdynamikregelung von Bosch", bekannt ist.

Bisher war für die unterschiedlichen Fahrzeugantriebskonzepte bzw. für jede Art von Schlupfregelsystem, welches in einem Fahrzeug zum Einsatz kam, ein eigenes Verfahren bzw. eine eigene Vorrichtung zur Ermittlung der die Geschwindigkeit des Fahrzeuges beschreibenden Größe erforderlich. Mit dem erfindungsgemäßen Verfahren bzw. mit der erfindungsgemäßen Vorrichtung liegt nun ein Verfahren bzw. eine Vorrichtung vor, welches bzw. welche sowohl für Brems- als auch für Antriebsschlupfregelsysteme eingesetzt werden kann.

Die universelle Einsetzbarkeit des erfindungsgemäßen Verfahrens und somit auch der erfindungsgemäßen Vorrichtung beruht zum einen darauf, daß die die Geschwindigkeit des Fahrzeuges beschreibende Größe ausgehend von einem vorteilhaft gewählten Ansatz gebildet wird, der einen die Geschwindigkeit des Fahrzeuges beschreibenden Anteil bzw. einen die Beschleunigung des Fahrzeuges beschreibenden Anteil berücksichtigt. Zum anderen beruht sie darauf, daß der zum Zeitpunkt der Bildung der die Geschwindigkeit des Fahrzeuges beschreibenden Größe vorliegende Betriebszustand des Fahrzeuges ermittelt wird, und daß in Abhängigkeit dieses Betriebszustandes dasjenige Rad des Fahrzeuges ausgewählt wird, welches für die Ermittlung der die Geschwindigkeit des Fahrzeuges beschreibenden Größe zu diesem Zeitpunkt und in diesem Betriebszustand des Fahrzeuges am besten geeignet ist.

Die Ermittlung des Betriebszustandes des Fahrzeuges erfolgt dabei wenigstens in Abhängigkeit von den wenigstens für zwei Räder des Fahrzeuges ermittelten Geschwindigkeiten. Hierbei werden die Geschwindigkeiten der wenigstens zwei Räder ihrer Größe nach sortiert und die die Geschwindigkeit des Fahrzeuges beschreibende Größe vorteil hafterweise mit den sortierten Geschwindigkeiten verglichen. Ausgehend von den so ermittelten Betriebszuständen des Fahrzeuges ist eine Entscheidung bzgl. des auszuwählenden Rades möglich.

Die Geschwindigkeit des für den jeweiligen Betriebszustand des Fahrzeuges ermittelten Rades wird bei der Bildung des die Geschwindigkeit des Fahrzeuges beschreibenden Anteils bzw. bei der Bildung des die Beschleunigung des Fahrzeuges beschreibenden Anteils berücksichtigt. Als vorteilhaft hat es sich hierbei erwiesen, die Geschwindigkeit des ausgewählten Rades jeweils mit einem, ebenfalls wenigstens in Abhängigkeit des Betriebszustandes des Fahrzeuges ermittelten Faktor, zu bewerten. Durch die Faktoren wird festgelegt, wie stark das für den jeweiligen Betriebszustand ausgewählte Rad in die Bildung der die Geschwindigkeit des Fahrzeuges beschreibenden Größe eingeht.

Zumindest für einen Teil der Betriebszustände des Fahrzeuges ist es von Vorteil, die Ermittlung des ausgewählten Rades bzw. die Ermittlung der für die Bewertung der Geschwindigkeit des ausgewählten Rades erforderlichen Faktoren unter Verwendung von Plausibilitätsabfragen, die in Abhängigkeit des jeweils ermittelten Betriebszustandes durchgeführt werden, innerhalb des zugehörigen Betriebszustandes zu verfeinern.

Die Plausibilitätsabfragen können beispielsweise wenigstens in Abhängigkeit der Geschwindigkeiten der Räder bzw. in Abhängigkeit einer die Beschleunigung des Fahrzeuges beschreibenden Größe durchgeführt werden.

Ein weiterer Vorteil des erfindungsgemäßen Verfahrens bzw. der erfindungsgemäßen Vorrichtung besteht darin, daß ausgehend von bekannten Brems- bzw. Antriebsschlupfregelsystemen im wesentlichen keine zusätzliche Sensorik erforderlich ist. So kann das erfindungsgemäße Verfahren bzw. die erfindungsgemäße Vorrichtung beispielsweise auf die ohnehin in Schlupfregelsystemen vorhandenen Sensoren zur Erfassung der Raddrehzahlen der einzelnen Räder zurückgreifen.

Weitere Vorteile sowie vorteilhafte Ausgestaltungen können den Unteransprüchen, der Zeichnung sowie der Beschreibung des Ausführungsbeispiels entnommen werden.

Zeichnung

Die Zeichnung besteht aus den Figuren 1 bis 4. Figur 1 zeigt beispielhaft ein mit einem Schlupfregelsystem ausgestattetes Fahrzeug, bei dem das erfindungsgemäße Verfahren bzw. die erfindungsgemäße Vorrichtung implementiert ist. In Figur 2 ist ausgehend von einem Schlupfregelsystem zum einen die für die Durchführung des erfindungsgemäßen Verfahrens bzw. die für die erfindungsgemäße Vorrichtung im wesentlichen benötigte Sensorik bzw. Aktuatorik und zum anderen die Strukturierung des hierfür verwendeten Steuergerätes dargestellt. Figur 3 zeigt für das erfindungsgemäße Verfahren bzw. für die erfindungsgemäße Vorrichtung, ausgehend von welchen Größen die die Geschwindigkeit des Fahrzeuges beschreibende Größe ermittelt wird. In Figur 4 sind mit Hilfe einer Tabelle die verschiedenen Betriebszustände des Fahrzeuges aufzeigt, anhand derer das für die Ermittlung der die Geschwindigkeit des Fahrzeuges beschreibenden Größe benötigte Rad des Fahrzeuges bzw. die zur Bewertung der Geschwindigkeit des ausgewählten Rades benötigten Faktoren ausgewählt werden.

Es sei darauf hingewiesen, daß Blöcke mit derselben Bezeichnung in unterschiedlichen Figuren dieselbe Funktion haben.

Ausführungsbeispiel

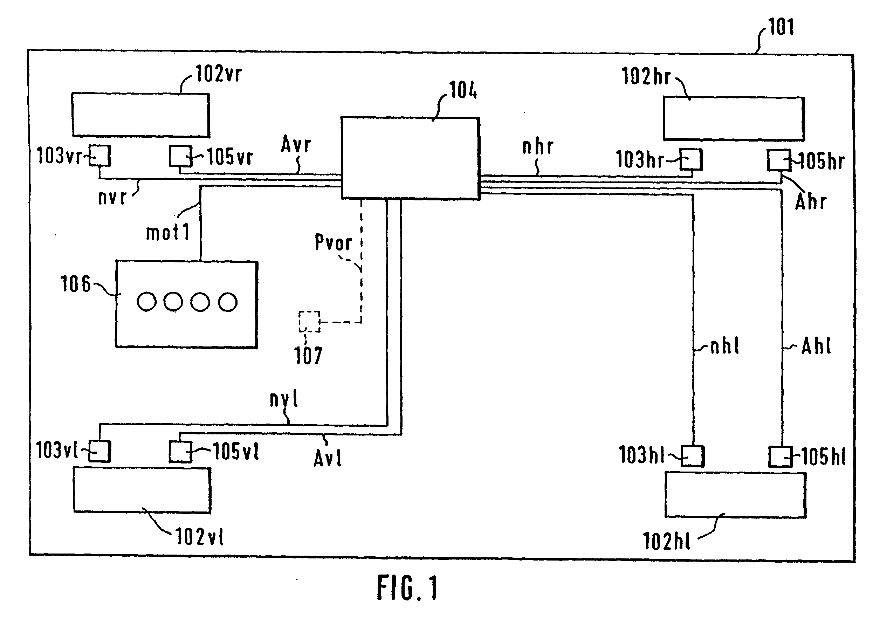

Die Erfindung geht von aus dem Stand der Technik bekannten Regelungssystemen aus, mit denen beispielsweise der Bremsschlupf bzw. der Antriebsschlupf der Räder eines Fahrzeuges beeinflußbar ist. Dies soll keine Einschränkung der erfindungsgemäßen Idee darstellen. Das erfindungsgemäße Verfahren bzw. die erfindungsgemäße Vorrichtung kann auch bezüglich einer Regelung eingesetzt werden, die beispielsweise einer Brems- bzw. Antriebsschlupfregelung übergeordnet ist. Hierzu sind, ausgehend von Figur 1, eventuell zusätzliche Sensoren erforderlich. Handelt es sich beispielsweise um ein System zur Regelung der Gierrate eines Fahrzeuges, so sind ferner wenigstens ein Lenkwinkelsensor, ein Querbeschleunigungssensor sowie ein Gierratensensor erforderlich.

Bei Systemen zur Regelung des Bremsschlupfes werden für üblich in bekannter Weise zur Regelung des Bremsschlupfes die auf die Räder wirkenden Bremsmomente durch Betätigung der Bremsen variiert. Bei Systemen zur Regelung des Antriebsschlupfes wird in bekannter Weise der Antriebsschlupf der Räder für üblich durch Erzeugung eines Bremsmomentes durch Betätigung der Bremsen der Räder bzw. durch Beeinflussung des vom Motor abgegebenen Antriebsmomentes eingestellt. Für Systeme zur Regelung des Brems- und/oder Antriebsschlupfes gilt für die Einstellung der entsprechenden Schlüpfe entsprechendes. Bei einigen Systemen können die zur Regelung des entsprechenden Schlupfes erforderlichen Bremsmomente für die entsprechenden Räder individuell eingestellt werden.

Einleitend soll zunächst auf die Problematik bei der Ermittlung einer die Geschwindigkeit eines Fahrzeuges beschreibenden Größe, welche im weiteren Verlauf als Referenzgeschwindigkeit des Fahrzeuges bezeichnet wird, eingegangen werden.

Bisher war zum einen für jede Art von Schlupfregelsystem, welches in einem Fahrzeug zum Einsatz kam, ein eigenes Konzept, d.h. ein eigenes Verfahren bzw. eine eigene Vorrichtung zur Ermittlung der Referenzgeschwindigkeit des Fahrzeuges erforderlich. So wurde beispielsweise in einem Bremsschlupfregler ein anderes Konzept eingesetzt, als in einem Antriebsschlupfregler.

Ebenso war für die unterschiedlichen Fahrzeugantriebskonzepte jeweils ein unterschiedliches Konzept für die Ermittlung der Referenzgeschwindigkeit des Fahrzeuges erforderlich. So unterscheidet sich beispielsweise das Konzept für ein einachsig angetriebenes Fahrzeug von dem für ein allradgetriebenes Fahrzeug. Bei einem einachsig angetriebenen Fahrzeug kann bei der Ermittlung der Referenzgeschwindigkeit des Fahrzeuges im Antriebsfall auf die nicht angetriebenen Räder zurückgegriffen werden, da diese als freirollende Räder normalerweise schlupffrei sind. Dahingegen ist bei einem allradgetriebenen Fahrzeug die Auswahl des bzw. der geeigneten Räder schwieriger, da im Normalfall sämtliche Räder eines allradgetriebenen Fahrzeuges schlupfbehaftet sind.

Das erfindungsgemäße Verfahren bzw. die erfindungsgemäße Vorrichtung stellt ein Konzept dar, mit dem die Referenzgeschwindigkeit des Fahrzeuges für ein beliebig angetriebenes Fahrzeug, für einen beliebigen Betriebszustand des Fahrzeuges ermittelt werden kann. Dabei kann in dem Betriebszustand beispielsweise ein beliebiger Regelungseingriff eines beliebigen Schlupfreglers durchgeführt werden.

In Figur 1 ist ein Fahrzeug 101 mit Rädern 102vr, 102vl, 102hr bzw. 102hl dargestellt. Nachfolgend wird für die Räder des Fahrzeuges die vereinfachende Schreibweise 102ij eingeführt. Dabei gibt der Index i an, ob sich das Rad an der Hinterachse (h) oder an der Vorderachse (v) befindet Der Index j zeigt die Zuordnung zur rechten (r) bzw. zur linken (l) Fahrzeugseite an. Diese Kennzeichnung durch die beiden Indizes i bzw. j ist für sämtliche Größen bzw. Komponenten, bei denen sie Verwendung findet, entsprechend.

Jedem Rad 102ij ist ein Raddrehzahlsensor 103ij zugewiesen. Das vom jeweiligen Raddrehzahlsensor 103ij erzeugte Signal nij wird dem Steuergerät 104 zur weiteren Verarbeitung zugeführt. Zusätzlich sind den Rädern 102ij Aktuatoren 105ij zugewiesen, mit denen die auf die einzelnen Räder wirkenden Bremsmomente eingestellt werden können. Bei den Aktuatoren 105ij handelt es sich beispielsweise um Ventile zur Modulation des Radbremszylinderdruckes. Ferner umfaßt das Fahrzeug einen Motor 106.

Optional kann ein Sensor 107 vorgesehen sein, mit dem der vom Fahrer im Bremskreis eingestellte Vordruck Pvor erfaßbar ist. Dieser wird dem Steuergerät 104 als Signal Pvor zugeführt.

Im Steuergerät 104 werden die ihm zugeführten Signale verarbeitet bzw. ausgewertet. Entsprechend der im Steuergerät implementierten Regelung werden verschiedene Stellsignale ausgegeben. Es ist denkbar, daß das Steuergerät 104 Stellsignale Aij erzeugt, mit denen die den Rädern 102ij zugeordneten Aktuatoren 105ij zur Einstellung von Bremsmomenten angesteuert werden. Außerdem ist die Ausgabe eines Stellsignals mot1 denkbar, mit dem das vom Motor 106 abgegebene Antriebsmoment beeinflußbar ist.

Die bisher im Zusammenhang mit Figur 1 beschriebene Sensorik stellt im Bezug auf das erfindungsgemäße Verfahren bzw. im Bezug auf die erfindungsgemäße Vorrichtung die im wesentlichen erforderliche Sensorik dar. Wenn das Fahrzeug mit einem System zur Regelung des Bremsschlupfes bzw. mit einem System zur Regelung des Antriebsschlupfes ausgestattet ist, so sind die Raddrehzahlsensoren 103ij aufgrund dieser Systeme bereits vorhanden.

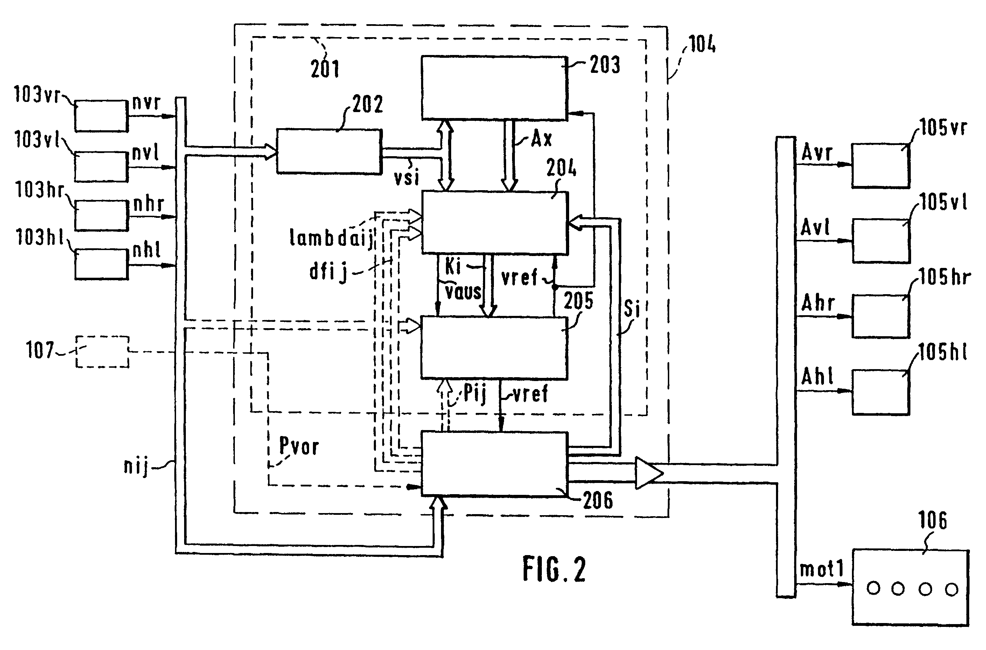

Bevor auf Figur 2 eingegangen wird, soll zunächst der dem erfindungsgemäßen Verfahren zugrundeliegende Ansatz zur Ermittlung der Referenzgeschwindigkeit des Fahrzeuges vorgestellt werden.

Die Ermittlung der Referenzgeschwindigkeit des Fahrzeuges setzt sich aus zwei Ansätzen zusammen. Zum einen wird die Referenzgeschwindigkeit des Fahrzeuges basierend auf einem Extrapolationsansatz gemäß der Beziehung

$$vref(n) = vref(n-1) + ax(n) \qquad (1)$$

ermittelt.

In Beziehung (1) stellt der Ausdruck vref(n) den Wert: für den aktuellen Zeitschritt n und der Ausdruck vref(n-1) den Wert für den vorigen Zeitschritt n-1 der Referenzgeschwindigkeit vref dar. Der Ausdruck ax(n) stellt den Wert einer noch zu beschreibenden Größe ax für den aktuellen Zeitschritt n dar.

Zusätzlich zu dem oben erwähnten ersten Ansatz wird über einen zweiten Ansatz eines der Räder des Fahrzeuges ausgewählt, welches zur Stützung bzw. zur Ermittlung der Referenzgeschwindigkeit des Fahrzeuges verwendet wird.

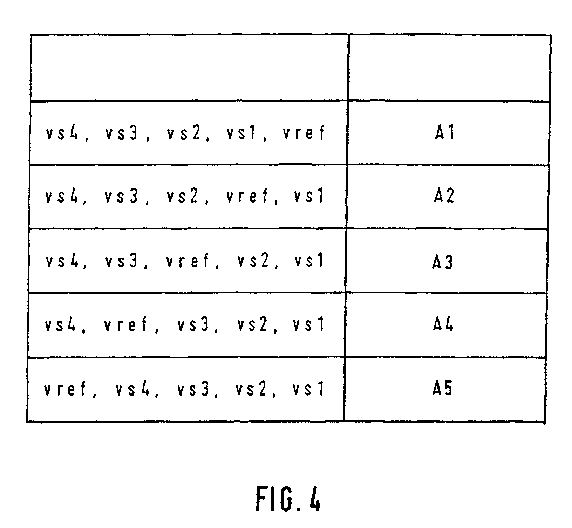

Die Auswahl eines Rades des Fahrzeuges mit Hilfe des zweiten Ansatzes wird noch im Zusammenhang mit Figur 4 ausführlich beschrieben. An dieser Stelle soll lediglich die dem zweiten Ansatz zugrundeliegende Vorgehensweise kurz aufgezeigt werden. In Abhängigkeit der Geschwindigkeiten vij der Räder, welche ausgehend von den Signalen nij gebildet werden, sowie der Referenzgeschwindigkeit vref des Fahrzeuges wird der Betriebszustand des Fahrzeuges ermittelt. Wenigstens für einen Teil der so ermittelten Betriebszustände werden in Abhängigkeit des jeweils ermittelten Betriebszustandes Plausibilitätsabfragen durchgeführt. In Abhängigkeit dieser Betriebszustände und, sofern durchgeführt, der Plausibilitätsabfragen, wird das Rad des Fahrzeuges ermittelt, welches zu dem Zeitpunkt der Ermittlung der Referenzgeschwindigkeit des Fahrzeuges hierfür am besten geeignet ist.

Ausgehend von der Geschwindigkeit vaus des ausgewählten Rades wird die Größe ax für den Zeitschritt n beispielsweise gemäß der Beziehung

$$ax(n) = ax(n-1) + koax * (vaus(n) - vref(n-1)) \qquad (2)$$

gebildet.

Die Größe ax stellt eine die Beschleunigung des Fahrzeuges beschreibende Größe dar. Die Funktionen, die die Größe ax bei der Ermittlung der Referenzgeschwindigkeit des Fahrzeuges hat, werden weiter unten ausführlich beschrieben. In diesem Zusammenhang sei hier lediglich erwähnt, daß die Größe ax bzgl. der Referenzgeschwindigkeit des Fahrzeuges die Funktion einer adaptiven Steigung bzw. die Funktion eines Korrekturterms einnehmen kann.

Wie Beziehung (2) zeigt, hängt der Wert ax(n) der Größe ax für den aktuellen Zeitschritt n vom Wert des Ausdruckes ax(n-1) und einer mit einem ersten Faktor koax bewerteten Geschwindigkeitsdifferenz ab. Diese Geschwindigkeitsdifferenz wird in Abhängigkeit des Ausdruckes vaus(n), der den Wert der Geschwindigkeit vaus des ausgewählten Rades zum aktuellen Zeitschritt n beschreibt, und des Ausdruckes vref(n-1), d.h. dem Wert der Referenzgeschwindigkeit vref für den Zeitschritt n-1 gebildet.

Die mit Hilfe der Beziehung (2) gezeigte Ermittlung der Größe ax wird auch als Stützung der Größe ax durch die Geschwindigkeit vaus des ausgewählten Rades bezeichnet. Für die Referenzgeschwindigkeit des Fahrzeuges findet, ausgehend von dem mit der Beziehung (1) ermittelten Wert vref(n), eine entsprechende Stützung statt. Diese wird beispielsweise durch die Beziehung

$$vref(n+1) = vref(n) + kovx * (vaus(n) - vref(n-1)) \qquad (3)$$

beschrieben.

Der Wert des Ausdruckes vref(n+1), der den Wert der Referenzgeschwindigkeit vref des Fahrzeuges für den nachfolgenden Zeitschritt n+1 darstellt, hängt vom Wert des Ausdruckes vref(n) und einer mit einem zweiten Faktor kovx bewerteten Geschwindigkeitsdifferenz ab. Diese Geschwindigkeitsdifferenz entspricht der in Beziehung (2).

Sowohl der Wert des ersten Faktors koax, als auch der des zweiten Faktors kovx werden, wie das ausgewählte Rad, mit Hilfe des zweiten Ansatzes ermittelt. Ergibt sich anhand der Plausibilitätsabfragen, daß der Geschwindigkeitsverlauf des ausgewählten Rades für die Stützung der Referenzgeschwindigkeit des Fahrzeuges besonders plausibel ist, so werden beiden Faktoren große Werte zugewiesen. Ist der Geschwindigkeitsverlauf des ausgewählten Rades weniger plausibel, so werden den beiden Faktoren entsprechend kleinere Werte zugewiesen. Ist gar kein Rad zur Stützung geeignet, so wird den beiden Faktoren der Wert Null zugewiesen. Über die beiden Faktoren wird somit festgelegt, in welchem Maße das ausgewählte Rad in die Ermittlung der Referenzgeschwindigkeit des Fahrzeuges eingeht.

Durch Einsetzen der Beziehungen (1) und (2) in die Beziehung (3) ergibt sich folgende Darstellung für den Wert der Referenzgeschwindigkeit vref des Fahrzeuges für den Zeitschritt n+1:

$$vref(n+1) = [vref(n-1) + kovx * (vaus(n) - vref(n-1))]$$

$$+ [ax(n-1) + koax * (vaus(n) - vref(n-1))]$$

$$= \text{vvant}(n+1) + \text{vaant}(n+1) \qquad (4)$$

Gemäß Beziehung (4) läßt sich die Ermittlung der Referenzgeschwindigkeit des Fahrzeuges folgendermaßen darstellen: Der Wert vref(n+1) der Referenzgeschwindigkeit des Fahrzeuges für den Zeitschritt n+1 läßt sich in Abhängigkeit eines die Geschwindigkeit des Fahrzeuges beschreibenden Anteils vvant(n+1), der erste Ausdruck in eckigen Klammern, und in Abhängigkeit eines die Beschleunigung des Fahrzeuges beschreibenden Anteils vaant(n+1), der zweite Ausdruck in eckigen Klammern, ermitteln. Der erste Anteil, der die Geschwindigkeit des Fahrzeuges beschreibt, setzt sich, bezogen auf den Zeitschritt n+1, aus einem vorhergehenden Wert für die Referenzgeschwindigkeit des Fahrzeuges und der mit einem ersten Faktor kovx bewerteten, bereits oben beschriebenen Differenz zusammen. Der zweite Anteil, der die Beschleunigung des Fahrzeuges beschreibt, setzt sich aus einem Wert der Größe ax für einen vorhergehenden Zeitschritt und der mit einem zweiten Faktor koax bewerteten, bereits oben beschriebenen Differenz zusammen.

Handelt es sich bei dem im Fahrzeug implementierten Regelungssystem um ein System zur Regelung des Bremsschlupfes, oder führt ein übergeordnetes Regelungssystem mit Hilfe eines untergeordneten Bremsschlupfreglers eine Bremsschlupfregelung durch, so kann in diesen Fällen vorteilhafterweise zu den beiden oben beschriebenen Ansätzen ein weiterer Mechanismus hinzukommen. Bei diesem weiteren Mechanismus wird eine zusätzliche Stützung der Referenzgeschwindigkeit des Fahrzeuges in Abhängigkeit der Geschwindigkeit eines Rades vorgenommen. Dieses Rad wird bei diesem weiteren Mechanismus in bekannter Weise in sogenannten Anpassungsphasen durch gezieltes Unterbremsen einzelner Räder, d.h. durch gezielten Druckabbau im Radbremszylinder dieser Räder, ermittelt. Dabei kann das auf diese Art ermittelte Rad von dem, mit Hilfe des zweiten Mechanismus ermittelten verschieden sein.

Die mit dem erfindungsgemäßen Verfahren bzw. mit der erfindungsgemäßen Vorrichtung ermittelte Referenzgeschwindigkeit des Fahrzeuges wird in den bereits oben erwähnten Regelungssystemen beispielsweise für die Bildung der Schlupfwerte der Räder eingesetzt.

In Figur 2 ist die Strukturierung des zur Durchführung des erfindungsgemäßen Verfahrens bzw. des für die erfindungsgemäße Vorrichtung benötigten Steuergeräts 104 dargestellt. Im wesentlichen ist das Steuergerät in zwei Bereiche gegliedert. Der eine Bereich 201 umfaßt die erfindungswesentlichen Blöcke. Hierbei handelt es sich um die Blöcke 202, 203, 204 sowie 205. Der andere Bereich wird durch einen Block 206 gebildet, der im wesentlichen den Regler des implementierten Regelungssystems repräsentiert. Außerdem zeigt Figur 2 die für das erfindungsgemäße Verfahren bzw. für die erfindungsgemäße Vorrichtung im wesentlichen erforderliche Sensorik. Diese kann, wie bereits oben erwähnt, ausgehend von der Sensorik des implementierten Schlupfregelsystems um weitere Sensoren erweitert sein.

An dieser Stelle sei darauf hingewiesen, daß die in der Figur 2 eingezeichneten Größen nicht zeitdiskret dargestellt sind. Die gemäß den Beziehungen (1) bis (3) benötigten zeitdiskreten Werte für verschiedene Größen werden in den entsprechenden Blöcken ermittelt.

Die mit den Raddrehzahlsensoren 103ij erzeugten Signale nij, die die Raddrehzahlen der jeweiligen Räder 102ij repräsentieren, werden noch zu beschreibenden Blöcken 202 bzw. 206 zugeführt. Optional können die Signale auch einem Block 205 zugeführt werden. Für den Fall, daß ein Sensor 107 vorhanden ist, mit dem der vom Fahrer im Bremskreis eingestellte Vordruck Pvor erfaßbar ist, kann das mit Hilfe dieses Sensors 107 erzeugte Signal Pvor dem Block 206 zugeführt werden.

In dem Block 202 werden die Raddrehzahlen nij in die Geschwindigkeiten der Räder repräsentierende Größen vij umgerechnet und ihrer Größe nach sortiert. Da es sich bei den Größen vij um interne Größen des Blockes 202 handelt, sind diese in Figur 2 nicht gezeigt. Die der Größe nach sortierten Radgeschwindigkeiten vij werden als Größen vsi vom Block 202 aus den Blöcken 203 bzw. 204 zugeführt. Für die nach der Größe sortierten Größen vsi soll beispielsweise folgende Zuordnung gelten: Der Größe vs1 sei die Geschwindigkeit des langsamsten Rades, d.h. die kleinste Radgeschwindigkeit vij zugeordnet. Der Größe vs2 sei die Geschwindigkeit des zweitlangsamsten Rades, der Größe vs3 die Geschwindigkeit des zweitschnellsten und der Größe vs4 die Geschwindigkeit des schnellsten Rades, d.h. die größte Radgeschwindigkeit vij zugeordnet. Diese Zuordnung läßt sich durch die Relation vs1 < vs2 < vs3 < vs4 ausdrücken.

Ausgehend von den der Größe nach sortierten Radgeschwindigkeiten vsi werden im Block 203 Betriebszustände Ax des Fahrzeuges ermittelt, die dem Block 204 zugeführt werden. In die Ermittlung der Betriebszustände Ax geht neben den Größen vsi die im Block 205 ermittelte Referenzgeschwindigkeit vref des Fahrzeuges ein. Auf die im Block 203 ablaufende Ermittlung der Betriebszustände Ax wird im Rahmen der Beschreibung der Figur 4 ausführlicher eingegangen.

Im Block 204 laufen wenigstens ausgehend von den Betriebszuständen Ax des Fahrzeuges folgende Ermittlungen ab: Zum einen wird dasjenige Rad des Fahrzeuges ausgewählt, welches zur Ermittlung bzw. zur Stützung der Referenzgeschwindigkeit des Fahrzeuges verwendet wird. Zum anderen werden die bereits erwähnten Faktoren kovx bzw. koax ermittelt. Sowohl die Geschwindigkeit vaus des ausgewählten Rades, als auch die beiden Faktoren kovx bzw. koax, die beiden Faktoren sind in Figur 2 zu der Größe Ki zusammengefaßt, werden dem Block 205 zugeführt.

Zur Auswahl des für die Stützung bzw. Ermittlung der Referenzgeschwindigkeit des Fahrzeuges verwendeten Rades bzw. für die Ermittlung der Faktoren kovx bzw. koax werden wenigstens für einen Teil der Betriebszustände Ax in Abhängigkeit des jeweils ermittelten Betriebszustandes im Block 204 Plausibilitätsabfragen durchgeführt. Für einen Teil der Betriebszustände Ax sind solche Plausibilitätsabfragen allerdings nicht erforderlich, da für diese Betriebszustände beispielsweise entweder das ausgewählte Rad aufgrund des Betriebszustandes schon von vornherein feststeht oder aufgrund des Betriebszustandes keine Stützung der Referenzgeschwindigkeit durch ein Rad des Fahrzeuges als sinnvoll erscheint.

In die Plausibilitätsabfragen gehen neben den der Größe nach sortierten Radgeschwindigkeiten vsi weitere Größen ein. So wird dem Block 204 ausgehend vom Block 205 hierzu die Referenzgeschwindigkeit vref des Fahrzeuges zugeführt. Ferner können dem Block 204 zu diesem Zweck ausgehend vom Block 206 optional die Schlupfwerte der einzelnen Räder beschreibende Größen lambdaij bzw. Signale dfij, die den Ausfall einzelner Raddrehzahlsensoren 103ij anzeigen, zugeführt werden. Desweiteren erhält der Block 204 zur Durchführung der Plausibilitätsabfragen vom Block 206 Signale Si. In diesem Zusammenhang ist zu beachten, daß es sich bei den Signalen Si um eine Zusammenfassung verschiedener Signale handelt.

Die unter der Bezeichnung Si zusammengefaßten Signale bzw. Größen können beispielsweise Signale enthalten, die eine Information darüber abgeben, ob für den betrachteten Zeitschritt ein Eingriff des implementierten Schlupfregelsystems vorliegt. Ferner können sie eine Information über die Anzahl der im betrachteten Zeitschritt geregelten Räder enthalten. Außerdem können sie in Form einer die Beschleunigung des Fahrzeuges beschreibenden Größe eine Information bzgl. des Beschleunigungsverhaltens des Fahrzeuges enthalten, insbesondere darüber, ob sich das Fahrzeug in dem betrachteten Zeitschritt in einem Übergang von Verzögerung nach Beschleunigung, d.h. in einem entsprechenden Lastwechsel befindet.

Als Plausibilitätsabfragen werden beispielsweise folgende Abfragen verwendet: Durch Vergleiche der sortierten Radgeschwindigkeiten vsi untereinander bzw. mit der Referenzgeschwindigkeit vref kann überprüft werden, ob sich die Radgeschwindigkeiten zueinander bzw. zur Referenzgeschwindigkeit plausibel verhalten, d.h. ob sie zueinander synchron und jeweils stabil sind. Hierzu bietet sich beispielsweise die Ermittlung des Abstandes einzelner Radgeschwindigkeiten untereinander bzw. der Abstand einzelner Radgeschwindigkeiten zur Referenzgeschwindigkeit an. Beispielsweise ist ein geringer Abstand einer Radgeschwindigkeit von der Referenzgeschwindigkeit ein Indiz dafür, daß sich diese Geschwindigkeit für die Stützung der Referenzgeschwindigkeit eignen könnte.

Ferner bietet sich bei den Plausibilitätsabfragen eine Berücksichtigung der oben beschriebenen Lastwechsel an. Wird im momentan betrachteten Zeitpunkt festgestellt, daß solch ein Lastwechsel vorliegt, so kann bei der Ermittlung der Referenzgeschwindigkeit darauf vorausschauend reagiert werden, indem in dieser Situation bei der Ermittlung der Referenzgeschwindigkeit eines der Räder ausgewählt wird, dessen Geschwindigkeit zu dem Zeitpunkt des Lastwechsels über der momentan geltenden Referenzgeschwindigkeiten liegt. Solch ein Rad wird deshalb ausgewählt, da aufgrund des Lastwechsels die Fahrzeuggeschwindigkeit aller Voraussicht nach ansteigen wird, und deshalb zu ihrer Beschreibung eine ebenfalls ansteigende Referenzgeschwindigkeit erforderlich ist. Weitere Plausibilitätsabfragen werden dadurch realisiert, daß beispielsweise die Anzahl der geregelten Räder abgefragt wird.

Ferner lassen sich, sofern vorhanden, ausgehend von den Schlupfwerten lambdaij verschiedene Plausibilitätsabfragen realisieren. Beispielsweise kann ausgehend von den einzelnen Schlupfwerten lambdaij festgestellt werden, welche Räder sich instabil verhalten und somit für eine Stützung der Referenzgeschwindigkeit weniger gut geeignet sind. Außerdem ist über einen Vergleich der Summe der einzelnen Schlupfwerte lambdaij mit der Summe der Absolutwerte der einzelnen Schlupfwerte feststellbar, ob sich die Räder des Fahrzeuges in einem stabilen Zustand befinden oder nicht.

Auch sind, sofern diese vorhanden sind, ausgehend von den Signalen dfij Plausibilitätsabfragen denkbar. Mit den Signalen dfij wird angezeigt, ob bzw. welcher der Raddrehzahlsensoren 103ij eventuell fehlerbehaftet ist. Mit dieser Information lassen sich über Abfragen die Räder ermitteln, deren Geschwindigkeiten für eine Stützung der Referenzgeschwindigkeit nicht in Frage kommen.

Die Aufzählung obiger Plausibilitätsabfragen stellt keine umfassende Aufzählung dar und soll nicht einschränkend sein. Es ist durchaus denkbar, weitere Plausibilitätsabfragen einzusetzen. Ebenfalls ist es denkbar, für die Ermittlung des ausgewählten Rades bzw. für die Ermittlung der beiden Faktoren jeweils unterschiedliche Plausibilitätsabfragen zu verwenden. Je nach Betriebszustand Ax kann es dann folglich vorkommen, daß für die Ermittlung des ausgewählten Rades bzw. für die Ermittlung der beiden Faktoren dieselben bzw. verschiedene Plausibilitätsabfragen verwendet werden.

In dem Block 205 wird die die Geschwindigkeit des Fahrzeuges beschreibende Größe, die Referenzgeschwindigkeit vref ermittelt. Hierzu wird dem Block 205 ausgehend vom Block 204 die Geschwindigkeit vaus des ausgewählten Rades, sowie über die Größe Ki sowohl der erste Faktor koax als auch der zweite Faktor kovx zugeführt. Ausgehend von diesen Größen wird im Block 205 beispielsweise gemäß den Beziehungen (1) bis (3) die Referenzgeschwindigkeit vref des Fahrzeuges ermittelt und sowohl an die Blöcke 203, 204 als auch an den Block 206 ausgegeben.

Optional können dem Block 205 zum einen die von den Raddrehzahlsensoren 103ij erzeugten Signale nij, die intern in die Geschwindigkeiten der Räder beschreibende Größen vij umgesetzt werden, zugeführt werden. Zum anderen können dem Block 205, ausgehend vom Block 206, optional die die Radbremszylinderdrücke beschreibenden Größen Pij zugeführt werden. Ausgehend von den Größen Pij bzw. vij kann im Block 205 eine noch zu beschreibende Korrektur der Größe vref durchgeführt werden.

Der Block 206 stellt den für das im Fahrzeug implementierte Regelungssystem eingesetzten Regler dar. Als Eingangsgrößen werden dem Block 206 die mit den Raddrehzahlsensoren 103ij erzeugten Signale nij sowie die im Block 206 ermittelte Referenzgeschwindigkeit vref zugeführt.

Optional kann dem Block 206 die mit Hilfe eines Sensors 107 ermittelte Größe Pvor zugeführt werden. Wenn diese Größe im Block 206 verfügbar ist, kann ausgehend von dieser Größe und unter Berücksichtigung der im Block 206 für die Aktuatoren 105ij ermittelten Ansteuersignale Aij, die beispielsweise die Ansteuerzeiten dieser Aktuatoren beschreiben, unter Verwendung eines beispielsweise aus dem oben erwähnten in der Automobiltechnischen Zeitschrift veröffentlichten Artikel bekannten hydraulischen Modells die Radbremszylinderdrücke Pij ermittelt werden. Alternativ bietet sich, sofern die Radbremszylinderdrücke im Block 205 berücksichtigt werden sollen, auch eine Erfassung der Radbremszylinderdrücke mit Hilfe geeigneter Sensoren an.

Ferner werden im Block 206 die bereits erwähnten Signale Si ermittelt. In die Ermittlung der Signale Si gehen wenigstens die Größen nij ein. Ebenso werden reglerinterne Größen berücksichtigt, die beispielsweise eine Information über vom Regelungssystem durchgeführte Reglereingriffe enthalten.

Für den Fall, daß die den Schlupf der Räder beschreibenden Größen lambdaij bzw. die Signale dfij, mit denen ein Fehler des entsprechenden Raddrehzahlsensors 103ij angezeigt wird, im Block 204 benötigt werden, werden diese im Block 206 erzeugt. Sowohl in die Ermittlung der Größen lambdaij als auch in die Ermittlung der Signale dfij gehen die Größen nij ein.

Außerdem erzeugt der Block 206 entsprechend dem implementierten Regelungssystem beispielsweise wenigstens ausgehend von den Signalen nij und der Referenzgeschwindigkeit vref des Fahrzeuges Ansteuersignale Aij für die Aktuatoren 105ij bzw. ein Signal mot1 zur Beeinflussung des vom Motor 106 erzeugten Antriebsmomentes. Durch die Aktuatoren 105ij kann die auf das entsprechende Rad wirkende Bremskraft eingestellt werden. Durch die Beeinflussung der Radkräfte können die Schlüpfe der einzelnen Räder und durch die Beeinflussung des vom Motor erzeugten Antriebsmomentes kann der Summenschlupf der Räder geregelt werden. Je nachdem, um welche Art von Regelungssystem es sich handelt, können dem Block 206 weitere für die Regelung benötigte Größen zugeführt werden bzw. kann der Block 206 weitere für die Regelung benötigte Größen erzeugen.

An dieser Stelle sei darauf hingewiesen, daß die im Ausführungsbeispiel aufgezeigte Verwendung des erfindungsgemäßen Verfahrens bzw. der erfindungsgemäßen Vorrichtung keine Einschränkung darstellen soll. Es ist denkbar, das erfindungsgemäße Verfahren bzw. die erfindungsgemäße Vorrichtung auch in anderen Systemen einzusetzen, bei denen ebenfalls eine die Geschwindigkeit des Fahrzeuges beschreibende Größe erforderlich ist.

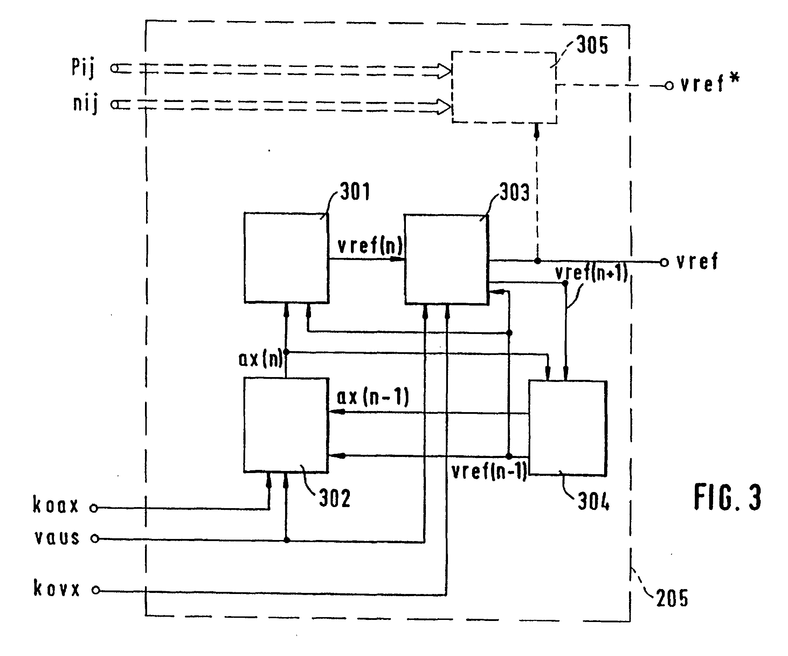

In Figur 3 ist die im Block 205 stattfindende Ermittlung der Referenzgeschwindigkeit vref des Fahrzeuges ausführlich dargestellt. Hierbei sind im wesentlichen die Beziehungen (1) bis (3) zu berücksichtigen.

In einem Block 301 wird ausgehend von einem Wert ax(n) der Größe ax zum Zeitschritt n und einem Wert vref(n-1) der Referenzgeschwindigkeit zum Zeitschrift n-1 der Wert vref(n) der Referenzgeschwindigkeit für den Zeitschritt n beispielsweise gemäß der Beziehung (1) ermittelt. Dieser Wert vref(n) wird einem Block 303 zugeführt.

In einem Block 302 wird der bereits erwähnte Wert ax(n) der Größe ax für den Zeitschritt n ermittelt. Hierzu werden dem Block 302 der Faktor koax, die Geschwindigkeit vaus des ausgewählten Rades, der Wert ax(n-1) der Größe ax sowie der Wert vref(n-1) der Referenzgeschwindigkeit für den Zeitschritt n-1 zugeführt. Ausgehend von der Größe vaus wird im Block 302 zunächst der Wert vaus(n) für den Zeitschritt n ermittelt. In Abhängigkeit der im Block 302 vorliegenden Größen wird beispielsweise gemäß Beziehung (2) der Wert ax(n) der Größe ax für den Zeitschritt n ermittelt. Der Wert ax(n) wird sowohl dem Block 301 als auch einem Block 304 zugeführt.

Dem Block 303 werden neben dem Wert vref(n) der Referenzgeschwindigkeit für den Zeitschritt n die Geschwindigkeit vaus des ausgewählten Rades, der Faktor kovx sowie der Wert vref(n-1) der Referenzgeschwindigkeit für den Zeitschritt n-1 zugeführt. Im Block 303 wird zunächst ausgehend von der Geschwindigkeit vaus der Wert vaus(n) dieser Größe für den Zeitschritt n ermittelt. In Abhängigkeit der im Block 303 vorliegenden Größen wird beispielsweise gemäß der Beziehung (3) der Wert vref(n+1) der Referenzgeschwindigkeit für den Zeitschritt n+1 ermittelt. Dieser Wert vref(n+1) wird dem Block 304 zugeführt. Ferner wird vom Block 303 ein zeitkontinuierliches Signal vref für die Referenzgeschwindigkeit ausgegeben. Dieses kann aus den zeitdiskreten Werten vref(n+1) beispielsweise mit Hilfe eines Haltegliedes erzeugt werden. Das Signal bzw. die Größe vref wird für weitere Blöcke außerhalb des Blockes 205 bereitgestellt.

In dem Block 304 werden die Werte ax(n) bzw. vref(n+1) gespeichert. Der Wert ax(n) steht somit für den Block 302 für einen nachfolgenden Zeitschritt zur Verfügung. Ebenso steht der Wert vref(n+1) für die Blöcke 301, 302 bzw. 303 für einen nachfolgenden Zeitschritt zur Verfügung.

Optional kann im Block 205 ein Block 305 für den Fall vorgesehen sein, daß im Block 205 die Radbremszylinderdrücke Pij verfügbar sind. Ausgehend von den Raddrehzahlen nij, die im Block 305 in die Geschwindigkeiten der Räder repräsentierende Größen vij umgerechnet werden, und den Radbremszylinderdrücken Pij können im Block 305 die Beschleunigungen bzw. die Verzögerungen der einzelnen Räder 102ij ermittelt und überwacht werden. Ausgehend von diesen Beschleunigungen bzw. Verzögerungen der einzelnen Räder kann im Block 305 die ihm zugeführte Größe vref in eine Größe vref* korrigiert werden, die dann für andere, außerhalb des Blockes 205 liegende Blöcke ausgegeben werden kann.

Im Falle der Initialisierung des gesamten Regelungssystems, was beispielsweise zu Fahrtbeginn nach Drehen des Zündschlüssels erfolgt, können den entsprechenden, für die rekursive Bildung der Größen ax bzw. vref benötigten Größen, geeignete Startwerte zugewiesen werden.

Figur 4 zeigt in einer schematisierten Darstellung in Form einer Tabelle, die im Block 203 ablaufende Ermittlung der Betriebszustände Ax des Fahrzeuges.

Die Betriebszustände Ax werden in Abhängigkeit der Geschwindigkeiten der Räder und der Referenzgeschwindigkeit ermittelt. Dazu wird die Referenzgeschwindigkeit vref mit den der Größe nach sortierten Geschwindigkeiten vsi verglichen und entsprechend einsortiert. Durch diesen Vergleich ergeben sich im vorliegenden Ausführungsbeispiel 5 verschiedene Betriebszustände. In der gewählten Tabellendarstellung sind dies die Betriebszustände A1, A2, A3, A4 bzw. A5.

Ausgehend von Figur 4 sei bzgl. des Blockes 204 erwähnt, daß in den Betriebszuständen Ax in Abhängigkeit des jeweils ermittelten Betriebszustandes die Plausibilitätsabfragen zur Ermittlung eines ausgewählten Rades für die Ermittlung der Referenzgeschwindigkeit bzw. die Plausibilitätsabfragen zur Ermittlung der beiden zur Bewertung der Geschwindigkeit des ausgewählten Rades erforderlichen Faktoren ermittelt werden. Die beiden Faktoren werden dabei so ermittelt, daß ihre Werte um so größer sind, je eher das ausgewählte Rad für eine Stützung geeignet ist.

Bei Betriebszuständen, für die anhand der Plausibilitätsabfragen festgestellt wird, daß ein Rad für die Ermittlung der Referenzgeschwindigkeit geeignet ist - in solchen Fällen sind den beiden Faktoren koax bzw. kovx von Null verschiedene Werte zugewiesen - wird die Referenzgeschwindigkeit vref gemäß der Beziehung (4) ermittelt. In diesem Fall stellt die Größe ax eine adaptive Steigung für die Referenzgeschwindigkeit vref dar, die sich gemäß der Beziehung (2) an der in Abhängigkeit der Geschwindigkeit vaus des ausgewählten Rades und der Referenzgeschwindigkeit vref gebildeten Differenz orientiert. Dadurch wird erreicht, daß die Referenzgeschwindigkeit vref - aufgrund der als eine Art Fehlerkorrekturterm wirkenden Größe ax - an die tatsächliche vorliegende Fahrzeuggeschwindigkeit herangeführt wird.

Bei Betriebszuständen, für die anhand der Plausibilitätsabfragen festgestellt wird, daß keines der Räder für die Ermittlung der Referenzgeschwindigkeit geeignet ist - diese Betriebszustände werden als instabile Betriebszustände bezeichnet - werden die beiden Faktoren zu Null gewählt. Ausgehend von den Beziehungen (2) bzw. (3) erkennt man, daß in diesem Fall sowohl für die Größe ax als auch für die Größe vref keine Stützung mehr stattfindet, und sich für beide Größen der Wert für den nachfolgenden Zeitschritt aus dem Wert des vorhergehenden Zeitschrittes ergibt. Dies führt gemäß Beziehung (4) dazu, daß der Wert vref(n+1) der Referenzgeschwindigkeit ausschließlich über einen konstanten Anteil ax(n-1) beeinflußt und somit extrapoliert wird. In diesem Fall stellt die Größe ax einen Fixwert auf der Basis des bis dahin adaptierten Extrapolationswertes ax(n-1) dar. Dies hat zur Folge, daß sich in einem solchen instabilen Betriebszustand die Steigung der Referenzgeschwindigkeit des Fahrzeuges immer in Abhängigkeit des Wertes ax(n-1) des letzten stabilen Betriebszustandes ergibt. Folglich ergeben sich für die Referenzgeschwindigkeit vref des Fahrzeuges in Abhängigkeit des letzten stabilen Betriebszustandes unterschiedliche Steigungen.

In diesem Zusammenhang sei darauf hingewiesen, daß hier der Begriff Steigung bzgl. der Größe ax nicht im strikt mathematischen Sinne zu verstehen ist. D.h. die Größe ax stellt nicht die zeitliche Ableitung der Referenzgeschwindigkeit vref dar. Vielmehr soll durch den verwendeten Begriff Steigung im Zusammenhang mit der Größe ax zum Ausdruck gebracht werden, daß aufgrund der additiven Berücksichtigung der Größe ax der zeitliche Verlauf der Referenzgeschwindigkeit beeinflußt wird. Je größer der Wert der Größe ax ist, desto stärker nimmt die Referenzgeschwindigkeit vref zu.

**Patentansprüche**

1. Verfahren zur Ermittlung einer die Geschwindigkeit eines Fahrzeuges beschreibenden Größe (vref),
   bei dem für wenigstens zwei Räder die Geschwindigkeiten der Räder (vij) ermittelt werden,
   bei dem wenigstens in Abhängigkeit der Geschwindigkeit eines ausgewählten Rades (vij) die die Geschwindigkeit des Fahrzeuges (vref) beschreibende Größe ermittelt wird,
   bei dem wenigstens in Abhängigkeit der Geschwindigkeiten von wenigstens zwei Rädern (vij) ein Betriebszustand des Fahrzeuges (Ax) ermittelt wird,
   bei dem wenigstens für einen Teil der ermittelten Betriebszustände (Ax) des Fahrzeuges in Abhängigkeit des jeweils ermittelten Betriebszustandes des Fahrzeuges Plausibilitätsabfragen zur Ermittlung des ausgewählten Rades durchgeführt werden,
**dadurch gekennzeichnet,**
**dass** zur Ermittlung des Betriebszustandes (Ax) des Fahrzeuges die Geschwindigkeiten der Räder (vij) nach ihrer Größe sortiert werden.

2. Verfahren nach Anspruch 1, **dadurch gekennzeichnet,**
**daß** zur Ermittlung des Betriebszustandes des Fahrzeuges ferner die die Geschwindigkeit des Fahrzeuges beschreibende Größe berücksichtigt wird.

3. Verfahren nach Anspruch 2, **dadurch gekennzeichnet, dass** zur Ermittlung des Betriebszustandes des Fahrzeuges (Ax) die die Geschwindigkeit des Fahrzeuges (vref) beschreibende Größe mit den sortierten Geschwindigkeiten (vsi) verglichen wird.

4. Verfahren nach Anspruch 1, **dadurch gekennzeichnet,**
**daß** die die Geschwindigkeit des Fahrzeuges (vref) beschreibende Größe wenigstens in Abhängigkeit eines die Geschwindigkeit des Fahrzeuges beschreibenden Anteils (vref(n)) bzw. eines die Beschleunigung des Fahrzeuges beschreibenden Anteils (ax(n)) ermittelt wird.

5. Verfahren nach Anspruch 4, **dadurch gekennzeichnet,**
**daß** der die Geschwindigkeit des Fahrzeuges beschreibende Anteil (vref(n)) wenigstens in Abhängigkeit eines vorhergehenden Wertes der die Geschwindigkeit des Fahrzeuges beschreibenden Größe (vref(n-1)) bzw. wenigstens in Abhängigkeit von der mit einem ersten Faktor (kovx) bewerteten Geschwindigkeit des ausgewählten Rades (vaus) ermittelt wird.

6. Verfahren nach Anspruch 4, **dadurch gekennzeichnet,**
**daß** der die Beschleunigung des Fahrzeuges beschreibende Anteil (ax(n)) wenigstens in Abhängigkeit einer die Beschleunigung des Fahrzeuges beschreibenden Größe (ax(n-1)) bzw. wenigstens in Abhängigkeit von der mit einem zweiten Faktor (koax) bewerteten Geschwindigkeit des ausgewählten Rades (vaus) ermittelt wird.

7. Verfahren nach Anspruch 5 oder 6, **dadurch gekennzeichnet, daß** zur Ermittlung des ersten bzw. des zweiten Faktors (kovx, koax) zur Bewertung der Geschwindigkeit des ausgewählten Rades (vaus) wenigstens für einen Teil der ermittelten Betriebszustände (Ax) des Fahrzeuges in Abhängigkeit des jeweils ermittelten Betriebszustandes des Fahrzeuges Plausibilitätsabfragen durchgeführt werden.

8. Verfahren nach Anspruch 1 oder 7, **dadurch gekennzeichnet,**
**daß** bei der Durchführung der Plausibilitätsabfragen wenigstens die Geschwindigkeiten der Räder (vij) und/oder eine die Beschleunigung des Fahrzeuges beschreibende Größe (ax) berücksichtigt wird.

9. Verfahren nach Anspruch 1, **dadurch gekennzeichnet,**
**daß** das Verfahren im Zusammenhang mit Schlupfregelsystemen, insbesondere Antriebsschlupfregelsystemen bzw. Bremsschlupfregelsystemen, eingesetzt wird.

10. Vorrichtung zur Ermittlung einer die Geschwindigkeit eines Fahrzeuges beschreibenden Größe,
die erste Mittel (202) enthält, mit denen für wenigstens zwei Räder die Geschwindigkeiten der Räder (vsi) ermittelbar sind,
die zweite Mittel (205) enthält, mit denen wenigstens in Abhängigkeit der Geschwindigkeit eines ausgewählten Rades (vaus) die die Geschwindigkeit des Fahrzeuges beschreibende Größe (vref) ermittelbar ist,
die dritte Mittel (203) enthält, mit denen wenigstens in Abhängigkeit der für wenigstens zwei Räder ermittelten Geschwindigkeiten (vsi) ein Betriebszustand (Ax) des Fahrzeuges ermittelbar ist,
die vierte Mittel enthält, mit denen wenigstens für einen Teil der ermittelten Betriebszustände (Ax) des Fahrzeuges in Abhängigkeit des jeweils ermittelten Betriebszustandes des Fahrzeuges Plausibilitätsabfragen zur Ermittlung des ausgewählten Rades durchgeführt werden,
**dadurch gekennzeichnet**
**daß** zur Ermittlung des Betriebszustandes (Ax) des Fahrzeuges die Geschwindigkeiten der wenigstens zwei Räder nach ihrer Größe sortiert werden.

**Claims**

1.  Method for determining a variable (vref) describing the speed of a vehicle, in which the speeds of the wheels (vij) are determined for at least two wheels, in which the variable which describes the speed of the vehicle (vref) is determined at least as a function of the speed of a selected wheel (vij), in which an operating state of the vehicle (Ax) is determined at least as a function of the speeds of at least two wheels (vij), in which plausibility interrogations to determine the selected wheel are carried out at least for some of the determined operating states (Ax) of the vehicle as a function of the respectively determined operating state of the vehicle, **characterized in that** the speeds of the wheels (vij) are sorted according to their magnitude in order to determine the operating state (Ax) of the vehicle.

2.  Method according to Claim 1, **characterized in that** the variable which describes the speed of the vehicle is additionally taken into account in order to determine the operating state of the vehicle.

3.  Method according to Claim 2, **characterized in that** the variable which describes the speed of the vehicle (vref) is compared with the sorted speeds (vsi) in order to determine the operating state of the vehicle (Ax).

4.  Method according to Claim 1, **characterized in that** the variable which describes the speed of the vehicle (vref) is determined at least as a function of a component (vref(n)) which describes the speed of the vehicle or a component (ax(n)) which describes the acceleration of the vehicle.

5.  Method according to Claim 4, **characterized in that** the component (vref(n)) which describes the speed of the vehicle is determined at least as a function of a previous value of the variable (vref(n-1)) which describes the speed of the vehicle, or at least as a function of the speed, evaluated with a first factor (kovx), of the selected wheel (vaus).

6.  Method according to Claim 4, **characterized in that** the component (ax(n)) which describes the acceleration of the vehicle is determined at least as a function of a variable (ax(n-1)) which describes the acceleration of the vehicle, or at least as a function of the speed, evaluated with a second factor (koax), of the selected wheel (vaus).

7.  Method according to Claim 5 or 6, **characterized in that**, to determine the first or second factor (kovx, koax) in order to evaluate the speed of the selected wheel (vaus), plausibility interrogations are carried out at least for some of the determined operating states (Ax) of the vehicle as a function of the respectively determined operating state of the vehicle.

8.  Method according to Claim 1 or 7, **characterized in that** at least the speeds of the wheels (vij) and/or a variable (ax) which describes the acceleration of the vehicle are taken into account in the execution of the plausibility interrogations.

9.  Method according to Claim 1, **characterized in that** the method is used in conjunction with slip control systems, in particular traction control systems and break slip control systems.

10. Device for determining a variable which describes the speed of a vehicle, which contains first means (202) with which the speeds of the wheels (vsi) can be determined for at least two wheels, which contains second means (205) with which the variable (vref) which describes the speed of the vehicle can be determined at least as a function of the speed of a selected wheel (vaus), which contains third means (203) with which an operating state (Ax) of the vehicle can be determined at least as a function of the speeds (vsi) determined for at least two wheels, which contains fourth means with which plausibility interrogations for determining the selected wheel are carried out at least for some of the determined operating states (Ax) of the vehicle as a function of the respectively determined operating state of the vehicle, **characterized in that** the speeds of the at least two wheels are sorted according to their magnitude in order to determine the operating state (Ax) of the vehicle.

**Revendications**

1.  Procédé pour déterminer une grandeur (vref) décrivant la vitesse du véhicule selon lequel :

    on détermine la vitesse d'au moins deux roues (vij),
    au moins en fonction de la vitesse d'une roue sélectionnée (vij), on détermine la grandeur décrivant la vitesse du véhicule (vref),

en fonction des vitesses d'au moins deux roues (vij), on détermine un état de fonctionnement du véhicule (Ax), pour au moins une partie de l'état de fonctionnement déterminé (Ax) du véhicule, en fonction de l'état de fonctionnement déterminé respectivement du véhicule, on effectue des interrogations de plausibilité pour déterminer la roue sélectionnée,

**caractérisé en ce que**
pour déterminer l'état de fonctionnement (Ax) du véhicule, on classe les vitesses des roues (vij) selon leur grandeur.

2. Procédé selon la revendication 1,
**caractérisé en ce que**
pour déterminer l'état de fonctionnement du véhicule, on tient en outre compte de la grandeur décrivant la vitesse du véhicule.

3. Procédé selon la revendication 2,
**caractérisé en ce que**
pour déterminer l'état de fonctionnement du véhicule (Ax), on compare la grandeur décrivant la vitesse du véhicule (vref) avec les vitesses classées (vsi).

4. Procédé selon la revendication 1,
**caractérisé en ce qu'**
on détermine la grandeur décrivant la vitesse du véhicule (vref) au moins en fonction d'une partie (vref(n)) décrivant la vitesse du véhicule ou d'une partie (ax(n)) décrivant l'accélération du véhicule.

5. Procédé selon la revendication 4,
**caractérisé en ce que**
l'on détermine la partie (vref(n)) décrivant la vitesse du véhicule au moins en fonction d'une valeur précédente de la grandeur (vref(n-1)) décrivant la vitesse du véhicule ou au moins en fonction de la vitesse de la roue sélectionnée (vaus), cette vitesse étant pondérée par un premier coefficient (kovx).

6. Procédé selon la revendication 4,
**caractérisé en ce que**
l'on détermine la partie (ax(n)) décrivant l'accélération du véhicule au moins en fonction d'une grandeur (ax(n-1)) décrivant l'accélération du véhicule ou au moins en fonction de la vitesse de la roue sélectionnée (vaus), pondérée par un second coefficient (koax).

7. Procédé selon la revendication 5 ou 6,
**caractérisé en ce que**
pour déterminer le premier ou le second coefficient (kovx, koax) pour pondérer la vitesse de la roue sélectionnée (vaus), on effectue des interrogations de plausibilité au moins pour une partie des états de fonctionnement (Ax) du véhicule, obtenus, en fonction de l'état de fonctionnement chaque déterminé du véhicule.

8. Procédé selon la revendication 1 ou 7,
**caractérisé en ce que**
dans l'exécution des interrogations de plausibilité, on tient au moins compte des vitesses des roues (vij) et/ou d'une grandeur (ax) décrivant l'accélération du véhicule.

9. Procédé selon la revendication 1,
**caractérisé en ce qu'**
on utilise le procédé en liaison avec un système de régulation antipatinage, en particulier un système antipatinage à l'entraînement ou un système de régulation de freinage.

10. Dispositif pour déterminer une grandeur décrivant la vitesse d'un véhicule comprenant :

- des premiers moyens (202) avec lesquels on détermine la vitesse d'au moins deux roues (vsi),
- des seconds moyens (205) à l'aide desquels, en fonction de la vitesse d'une roue sélectionnée (vaus), on détermine la grandeur (vref) décrivant la vitesse du véhicule,
- des troisièmes moyens (203) à l'aide desquels, au moins en fonction des vitesses (vsi) obtenues pour au moins deux roues, on détermine un état de fonctionnement (Ax) du véhicule,

- des quatrièmes moyens à l'aide desquels au moins pour une partie des états de fonctionnement obtenus (Ax) du véhicule, en fonction de l'état de fonctionnement déterminé du véhicule, on effectue des interrogations de plausibilité pour déterminer la roue sélectionnée,

**caractérisé en ce que**
pour déterminer l'état de fonctionnement (Ax) du véhicule, on classe en fonction de leur grandeur, les vitesses d'au moins deux roues.

FIG.1

FIG.2

EP 0 927 119 B1

FIG. 3

EP 0 927 119 B1

| | |
|---|---|
| vs4, vs3, vs2, vs1, vref | A1 |
| vs4, vs3, vs2, vref, vs1 | A2 |
| vs4, vs3, vref, vs2, vs1 | A3 |
| vs4, vref, vs3, vs2, vs1 | A4 |
| vref, vs4, vs3, vs2, vs1 | A5 |

# FIG. 4